# EUROPEAN PATENT APPLICATION

(11) **EP 2 375 334 A1**
(43) Date of publication of application: **12.10.2011**
(21) Application number: 09837476.2
(22) Date of filing: 06.01.2009
(51) Int. Cl.: G06F 11/20, G06F 9/46

(54) **MANAGEMENT DEVICE, MANAGEMENT METHOD, AND PROGRAM**

(71) Applicant: Mitsubishi Electric Corporation, Tokyo 100-8310 (JP)
(72) Inventor: ITO, Takayuki, Tokyo 100-8310 (JP)
(74) Representative: Pfenning, Meinig & Partner GbR
(86) International application number: PCT/JP2009/050032
(87) International publication number: WO 2010/079587

(57) **Abstract**

When a fault occurs in a guest machine 2b of a virtual machine system 100b, a stop control part 5a of a guest machine 2a of a virtual machine system 100a requests a stop control part 4b of a host machine 1b to stop operation of the guest machine 2b. If the guest machine 2b does not stop operation normally, the stop control part 5a requests a BMC 8b to stop operation of the host machine 1b. The BMC 8b stops the host machine 1b, so that the machine where the fault occurs can be stopped.

## Description

### Technical Field

The present invention relates to a technique that manages a virtual machine system and, more particularly, to a technique that manages a virtual machine system having a redundant structure.

### Background Art

A conventional redundant structure technique includes the following examples.
(1) In the redundant structure of a physical machine system, one physical machine transmits heartbeat, or connects to a counterpart-system service and performs a simple operation check, to check the state of the counterpart system. If heartbeat ceases or the service of the counterpart system does not respond, this state is regarded as an abnormality of the counterpart system. The one physical machine transmits a counterpart-system stop request or reset request to a sending destination which is fixed in advance. Then, the one physical machine operates as a main system (for example, Patent Literature 1).
(2) In the redundant structure of a virtual machine system, one guest machine checks the state of a counterpart-system guest machine by operation checking using heartbeat or the like. If an abnormality is observed, the one guest machine requests a preset counterpart-system host machine to stop or reset the guest machine. Then, the one guest machine operates as a main system (for example, Patent Literature 2).

### Patent Literature 1: JP 2002-259155 A

### Patent Literature 2: JP 4-141744

### Summary of Invention

### Technical Problem

The conventional technique can stop a physical machine or virtual machine of the counterpart system where a fault occurs.
If an error occurs due to the fault of a VM (Virtual Machine) monitor or hardware when, e.g., the virtual machine is going to be stopped, the physical machine needs to be stopped. However, the conventional technique has a problem that, in such a case, it cannot stop the physical machine where the fault occurs.
When the physical machine and virtual machine are to be stopped because an abnormality occurs, a stop request is issued to a preset connection destination. If the virtual machine has been migrated to a different physical machine, but the issue destination of the stop request has not been changed, a problem may occur that a wrong physical machine is stopped or a virtual machine that needs to be stopped cannot be stopped.

It is one of the major objects of the present invention to solve the above problems. The major objects are to realize a mechanism that can stop a physical machine where a fault occurs when a virtual machine cannot be stopped normally, and to realize a mechanism that can stop a virtual machine or physical machine appropriately depending on the migration of the virtual machine.

### Solution to Problem

A management apparatus according to the present invention is a management apparatus that manages a host machine which is included in a virtual machine system and a guest machine which operates by utilizing the host machine, and includes
a guest stop instruction part that transmits to the virtual machine system a guest stop instruction instructing to stop operation of the guest machine, and
a host stop instruction part that determines whether or not the guest machine stops operation normally and, if it is determined that the guest machine does not stop operation normally, transmits to the virtual machine system a host stop instruction instructing to stop operation of the host machine.

A management apparatus according to the present invention manages
a first virtual machine system that includes at least a guest machine and migrates the guest machine, and
a second virtual machine system that includes at least a host machine and serves as a migration destination of the guest machine of the first virtual machine system,
the guest stop instruction part
determines whether or not the guest machine has migrated from the first virtual machine system to the second virtual machine system and, if it is determined that the guest machine has migrated from the first virtual machine system to the second virtual machine system, transmits to the second virtual machine system a guest stop instruction instructing to stop operation of the guest machine, and
the host stop instruction part
determines whether or not the guest machine stops operation normally in the second virtual machine system and, if it is determined that the guest machine has not stopped operation normally in the second virtual machine system, transmits to the second virtual machine system a host stop instruction instructing to stop operation of the host machine.

The guest stop instruction part
transmits the guest stop instruction to the first virtual machine system and, upon reception of a reply informing that the guest machine does not exist from the first virtual machine system, determines that the guest machine has migrated from the first virtual machine system to the second virtual machine system.

The guest stop instruction part
receives a notification notifying that the guest machine is a guest machine of the second virtual machine system from the second virtual machine system when the first virtual machine system starts a process of migrating the guest machine to the second virtual machine system,
receives a notification notifying that the guest machine is not a guest machine of the first virtual machine system from the first virtual machine system when the first virtual machine system completes the process of migrating the guest machine to the second virtual machine system, and
transmits the guest stop instruction to the first virtual machine system when the guest machine is stopped after receiving the notification from the second virtual machine system and before receiving a notification from the first virtual machine system.

The guest stop instruction part transmits the guest stop instruction when a fault occurs in the guest machine.

The management apparatus manages a host machine and guest machine of a virtual machine system including a BMC (Baseboard Management Controller), and
the host stop instruction part transmits the host stop instruction to the BMC of the virtual machine system and instructs the BMC to stop operation of the host machine.

The management apparatus is a virtual machine system that includes a host machine and a guest machine which operates by utilizing the host machine, and
the guest stop instruction part and the host stop instruction part operate in the guest machine.

A management method according to the present invention is a management method that manages, by a computer, a host machine which is included in a virtual machine system and a guest machine which operates by utilizing the host machine, and the management method includes
by the computer, transmitting to the virtual machine system a guest stop instruction instructing to stop operation of the guest machine, and
by the computer, determining whether or not the guest machine stops operation normally and, if it is determined that the guest machine does not stop operation normally, transmitting to the virtual machine system a host stop instruction instructing to stop operation of the host machine.

A program according to the present invention causes a computer that manages a host machine which is included in a virtual machine system and a guest machine which operates by utilizing the host machine, to execute
a guest stop instruction process of transmitting to the virtual machine system a guest stop instruction instructing to stop operation of the guest machine, and
a host stop instruction process of determining whether or not the guest machine stops operation normally and, if it is determined that the guest machine does not stop operation normally, transmitting to the virtual machine system a host stop instruction instructing to stop operation of the host machine.

### Advantageous Effects of Invention

According to the present invention, when a guest machine which is a virtual machine cannot be stopped normally, a host machine which is a physical machine where a fault occurs can be stopped.
A guest machine which is a virtual machine or a host machine which is a physical machine can be stopped appropriately in response to the migration of the virtual machine.

### Description of Embodiments

### Embodiment 1

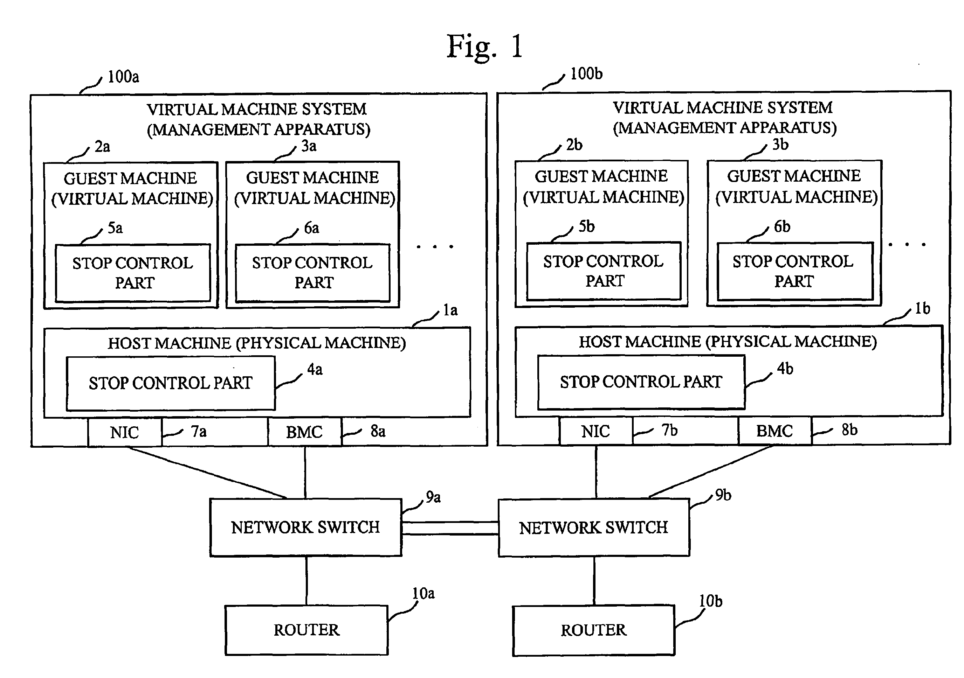

Fig. 1 shows the redundant structure of a virtual machine system according to the first embodiment.
In Fig. 1, a virtual machine system 100a and a virtual machine system 100b are connected to each other via network switches 9a and 9b.
The configuration of the virtual machine system 100a will be described hereinafter.
The virtual machine system 100b has the same configuration as that of the virtual machine system 100a. Elements denoted by 1b to 10b are redundant constituent elements respectively corresponding to elements denoted by 1a to 10a.

In the virtual machine system 100a, guest machines 2a and 3a operate on a host machine 1a.
The host machine 1a is a physical machine, and the guest machines 2a and 3a are virtual machines which operate by using the resources of the host machine 1a.
Stop control parts 4a, 5a, and 6a which stop the virtual machine system 100b being another system, operate in the host machine 1a and in the guest machines 2a and 3a, respectively.
The host machine 1a is provided with a network interface card (to be referred to as NIC hereinafter) 7a, and connects to the network switch 9a in order to communicate with another machine.
The network switch 9a is connected to other network devices such as a router 10a.
The host machine 1a is provided with a Baseboard Management Controller (to be referred to as BMC hereinafter) 8a. The BMC 8a enables the other machine to boot, stop, and reboot the host machine 1a via the network.
The virtual machine system 100a serves as the management device of the virtual machine system 100b and the virtual machine system 100b serves as the management device of the virtual machine system 100a.
More specifically, for example, upon detection of the abnormality of the virtual machine system 100b, the virtual machine system 100a instructs stop of the operations of guest machines 2b and 3b of the virtual machine system 100b. If the guest machine 2b or 3b does not stop normally, the virtual machine system 100a instructs a BMC 8b to stop the operation of a host machine 1b.
Also, for example, upon detection of the abnormality of the virtual machine system 100a, the virtual machine system 100b instructs stop of the operations of the guest machines 2a and 3a of the virtual machine system 100a. If the guest machine 2a or 3a does not stop normally, the virtual machine system 100b instructs the BMC 8a to stop the operation of the host machine 1a

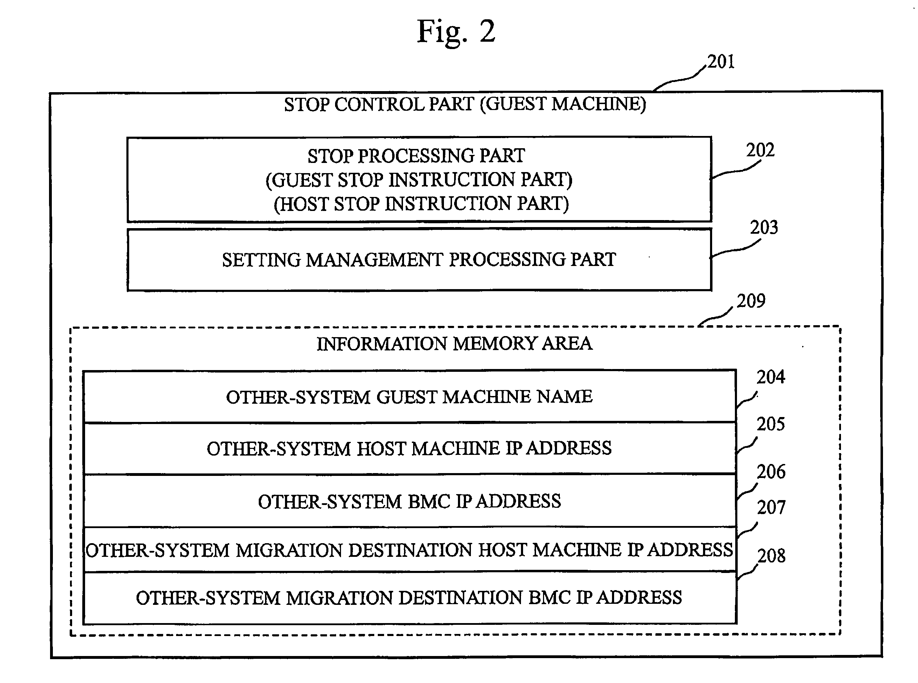

Fig. 2 shows the internal configuration of the stop control part on the guest machine. A stop control part 201 on the guest machine corresponds to the stop control part 5a or 6a, or a stop control part 5b or 6b shown in Fig. 1.
The stop control part 201 on the guest machine is provided with a stop processing part 202 and a setting management processing part 203. The stop processing part 202 stops the other-system machine. The stop control part 201 holds an other-system guest machine name 204, an other-system host machine IP address 205, an other-system host machine BMC IP address 206, and an other-system migration destination host machine IP address 207 and BMC IP address 208. The other-system migration destination host machine IP address 207 and BMC IP address 208 are used when migrating the guest machine to a different host machine.
Note that the other-system guest machine name 204 is manually preset.

The stop processing part 202 transmits a stop request (guest stop instruction), instructing stop of the other-system guest machine, to the other-system virtual machine system. If the other-system guest machine does not stop the operation normally, the stop processing part 202 transmits a stop request (host stop instruction), instructing stop of the operation of the other-system host machine, to the other-system virtual machine system. The stop processing part 202 is an example of a guest stop instruction part and a host stop instruction part.
The other-system guest machine name 204, the other-system host machine IP address 205, the other-system BMC IP address 206, the other-system migration destination host machine IP address 207, and the other-system migration destination BMC IP address 208 are stored in a predetermined information memory area 209 of the storage device of the host machine.
The other-system migration destination host machine IP address 207 and the other-system migration destination BMC IP address 208 will not be described in the first embodiment but will be in the second embodiment.

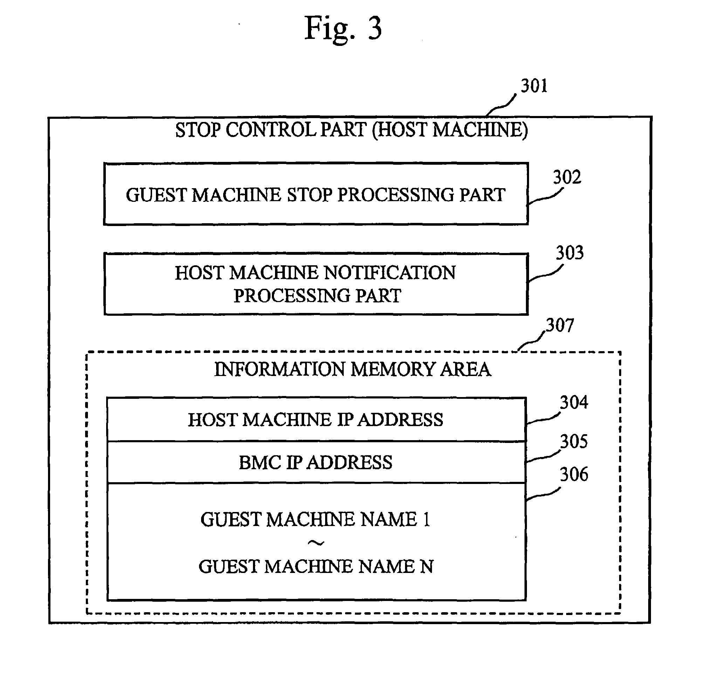

Fig. 3 shows the internal configuration of the stop control part on the host machine. A stop control part 301 on the host machine corresponds to the stop control part 4a or 4b of Fig. 1.
The stop control part 301 on the host machine is provided with a guest machine stop processing part 302 and a host machine notification processing part 303, and holds a host machine IP address 304, an IP address 305 of a BMC provided to its own host machine, and a list 306 of the names of the guest machines operating on the own host machine.
Assume that the host machine IP address 304 and BMC IP address 305 are manually preset.
The host machine IP address 304, the BMC IP address 305, and the guest machine name list 306 are stored in a predetermined information memory area 307 of the storage device of the host machine.

Fig. 4 shows the processing content of the host machine notification processing part 303. Fig. 5 shows the processing content of the setting management processing part 203. Fig. 6 shows the processing content of the stop processing part 202. Fig. 7 shows the processing content of the guest machine stop processing part 302.

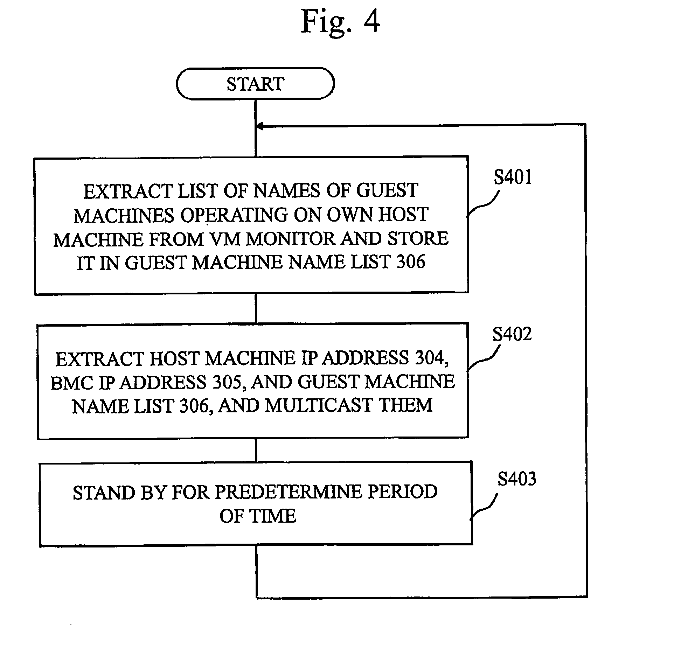

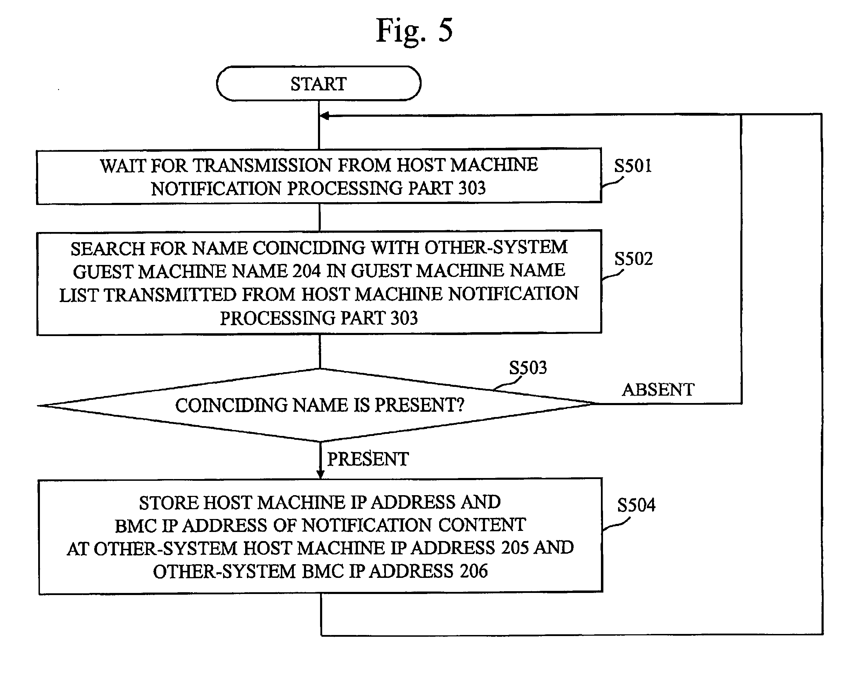

The operation will be described.
First, the operation of the host machine and guest machine at booting will be described with reference to Figs. 4 and 5.

The host machine 1a is booted. When booting of the host machine 1a is completed, the host machine 1a boots the guest machines 2a and 3a.
In the stop control part 4a of the host machine 1a, the host machine notification processing part 303 extracts the list of the names of the booted guest machines from the VM monitor and stores it in the guest machine name list 306 (S401).
Subsequently, the host machine notification processing part 303 multicasts the host machine IP address 304, the BMC IP address 305, and the list 306 of the names of the booted machines (S402).
This multicast is repeated periodically (S403).
The same process is performed in the host machine 1b as well.

Upon reception of the periodical multicast from the stop control part 4a of the host machine 1a of the virtual machine system 100b (S501), the setting management processing part 203 of each of the stop control parts 5b and 6b on the guest machines 2b and 3b of the virtual machine system 100b checks if a name coinciding with the other-system guest machine name 204 is present in the transmitted guest machine name list (S502, S503).
If such a name is present, the setting management processing part 203 stores the host machine IP address and BMC IP address included in the transmitted notification at the other-system host machine IP address 205 and other-system BMC IP address 206 (S504).

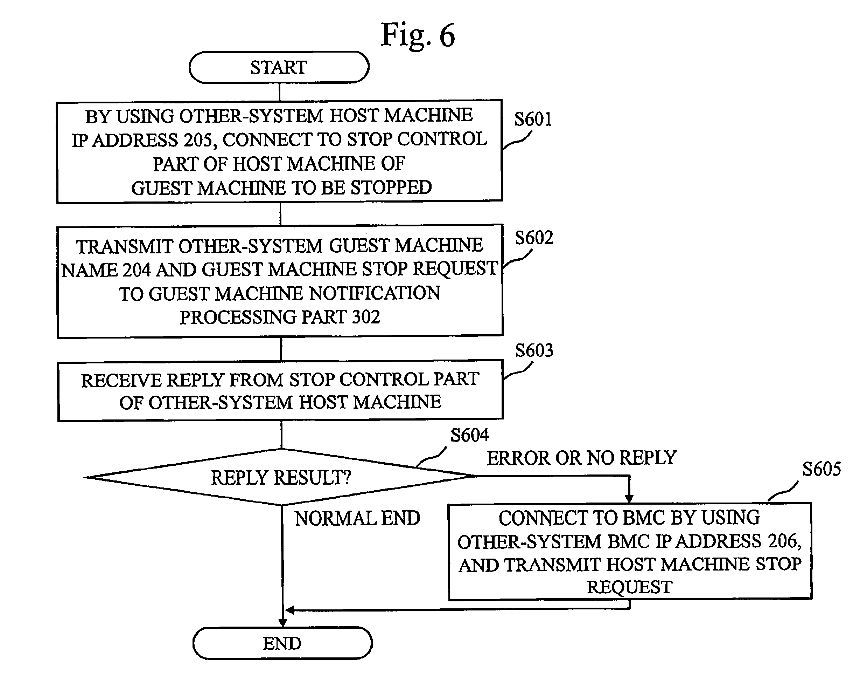

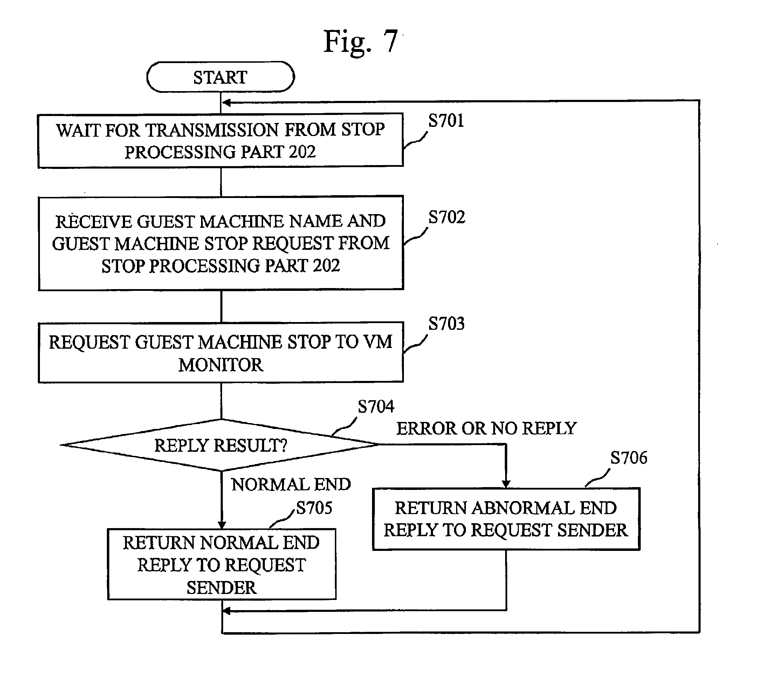

An operation that takes place when a fault occurs will be described with reference to Figs. 6 and 7.
Upon detection of an abnormality such as intermittence of the heartbeat between guest machines, the stop processing parts 202 on the guest machines perform the following process in order to stop the system where the abnormality occurs.
For example, assume that an abnormality occurs in the guest machine 2b of the virtual machine system 100b and that the stop control part 5a of the guest machine 2a of the virtual machine system 100a stops the guest machine 2b.

The stop processing part 202 of the stop control part 5a connects to a stop control part 4b of the host machine 1b of the virtual machine system 100b by using the other-system host machine IP address 205 (S601), and transmits the other-system guest machine name 204 and a stop request (guest stop instruction) for the guest machine 2b to the stop control part 4b (S602).

The guest machine stop processing part 302 of the stop control part 4b waits to receive the stop request (S701). When it receives the stop request (S702), the guest machine stop processing part 302 transfers the guest machine name of the guest machine 2b to the VM monitor and requests the VM monitor to stop the guest machine 2b (S703).
If the guest machine 2b stops normally ("normal end" in S704), the guest machine stop processing part 302 of the stop control part 4b sends a completion notification to the stop control part 5a (S705).
If the guest machine 2b cannot be stopped, or can be stopped but not normally ("error or no reply" in S704), an abnormal end reply is sent (S706).

In the stop control part 5a of the guest machine 2a of the virtual machine system 100a, the stop processing part 202 receives a reply from the stop control part 4b of the host machine 1b of the virtual machine system 100b (S603). If the reply is a completion notification ("normal end" in S604), the process ends.
If the reply from the stop control part 4b is an abnormal end reply or if there is no reply from the stop control part 4b ("error or no reply" in S604), the stop processing part 202 of the stop control part 5a refers to the other-system BMC IP address 206, and sends a stop request (host stop instruction) for the host machine 1b to the other-system BMC 8b (S605).
The BMC 8b that has received the stop request stops the host machine 1b. Hence, the system where an abnormality occurs can be stopped.

In this manner, according to this embodiment, when a virtual machine cannot be stopped normally due to, e.g., a fault of the VM monitor or hardware, the physical machine where the fault occurs can be stopped.

So far this embodiment has explained a method of stopping an abnormal system in the redundant structure of a virtual machine which has a main-system guest machine and standby-system guest machine each having a stop control part on the host machine and a stop control part on the guest machine (to be described hereinafter).
(A) The stop control part on the host machine notifies the name of the virtual machine that is running, the sending destination of the guest machine stop request, and the sending destination of the host machine stop request to the stop control part of the guest machine.
(B) The stop control part on the guest machine includes the following setting management processing part and stop processing part.
If the guest machine name notified from the stop control part on the host machine is the name of a guest machine that serves as the redundant system of its own system, the setting management processing part stores the sending destination of the guest machine stop request notified and the sending destination of the host machine stop request notified.
The stop processing part sends the guest machine stop request by using the sending destination of the guest machine stop request which is stored by the setting management processing part when stopping the other-system guest machine.
When the stop process of the guest machine fails, the stop processing part sends a host machine stop request to the sending destination of the host machine stop request stored by the setting management processing part.

### Embodiment 2

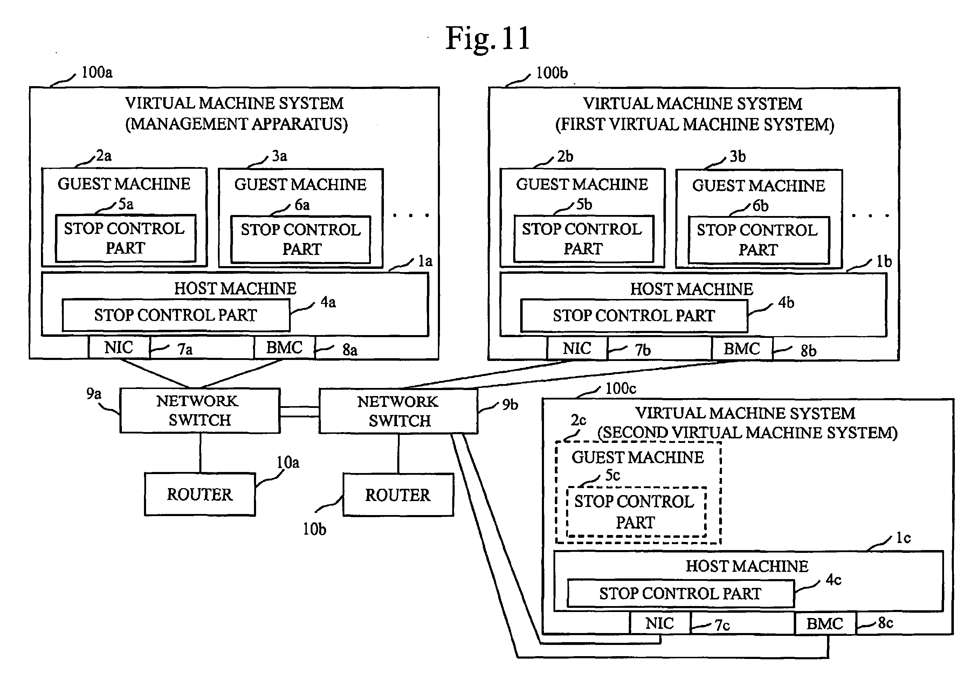

Fig. 11 shows the redundant structure of a virtual machine system according to the second embodiment.
Compared with the arrangement of Fig. 1, a virtual machine system 100c is added in the second embodiment.
This embodiment explains an example where a guest machine 2b of a virtual machine system 100b is migrated to the virtual machine system 100c.
In the virtual machine system 100c, a host machine 1c is a physical machine similar to a host machine 1a or 1b.
The guest machine 2b becomes a guest machine 2c when migrated from the virtual machine system 100b to the virtual machine system 100c. After the migration, the guest machine 2c operates by utilizing the resources of the host machine 1c.
Reference numeral 4c denotes a stop control part provided to the host machine 1c.
Reference numeral 5c denotes a stop control part provided to the guest machine 2c.
Reference numeral 7c denotes an NIC provided to the host machine 1c.
Reference numeral 8c denotes a BMC provided to the host machine 1c.
The stop control part 4c has the configuration shown in Fig. 3, and the stop control part 5c has the configuration shown in Fig. 2.
The virtual machine system 100b which is the migration origin of the guest machine corresponds to a first virtual machine system. The virtual machine system 100c which is the migration destination of the guest machine corresponds to a second virtual machine system.

The operation will be described that is carried out when the guest machine 2b is migrated from the host machine 1b to the host machine 1c so as to become the guest machine 2c by utilizing the function of the virtual machine monitor.
A recent virtual machine monitor can reboot a guest machine on a different host machine, or migrate an operating guest machine onto another host machine.
An abnormal system stop process according to the second embodiment, which is carried out when migrating the guest machine to a different host machine, will be described hereinafter.

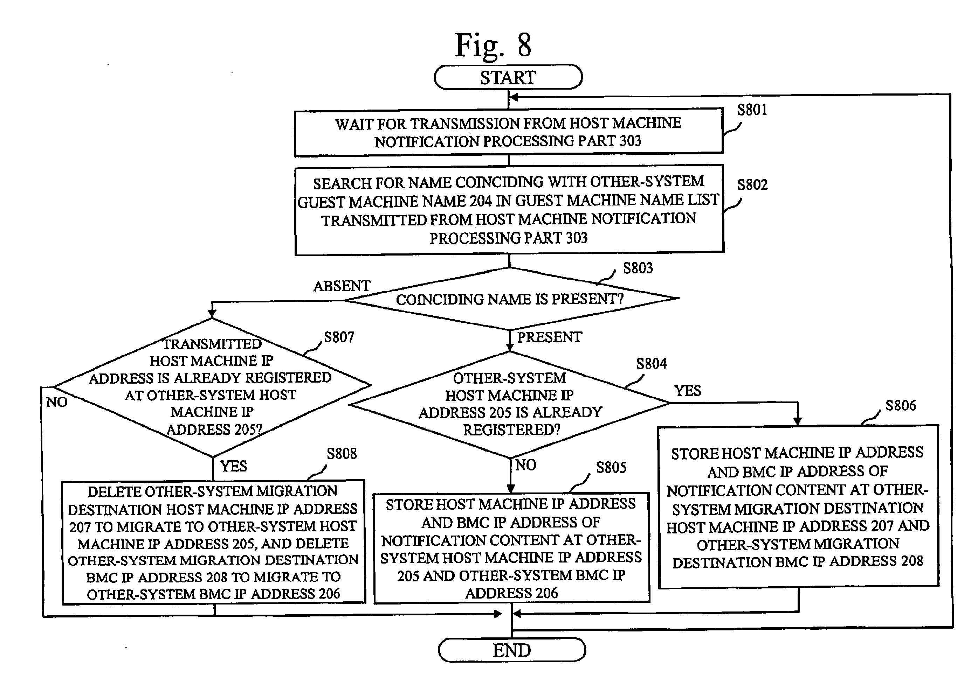

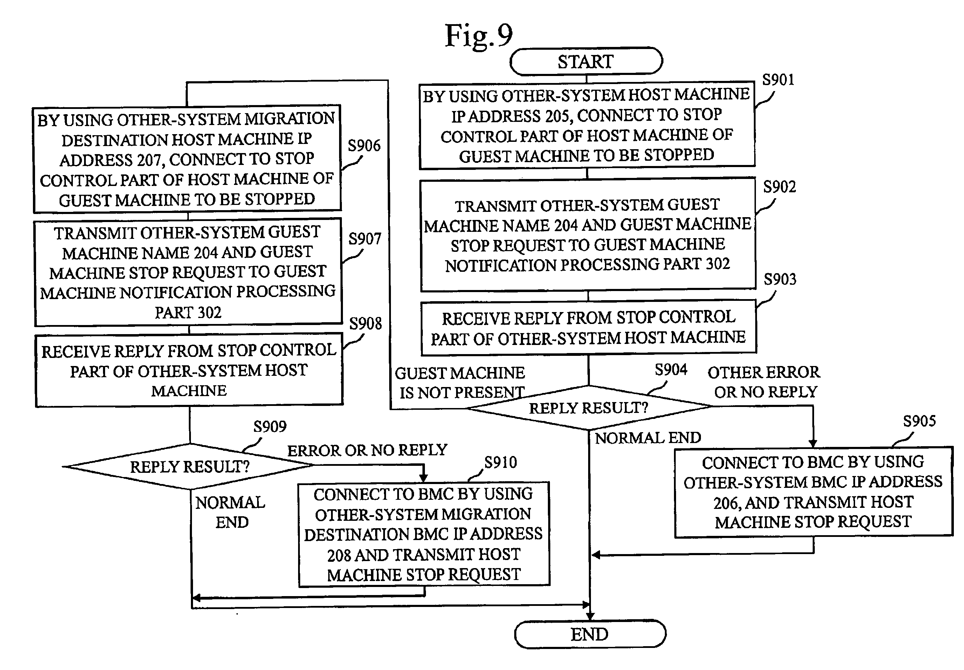

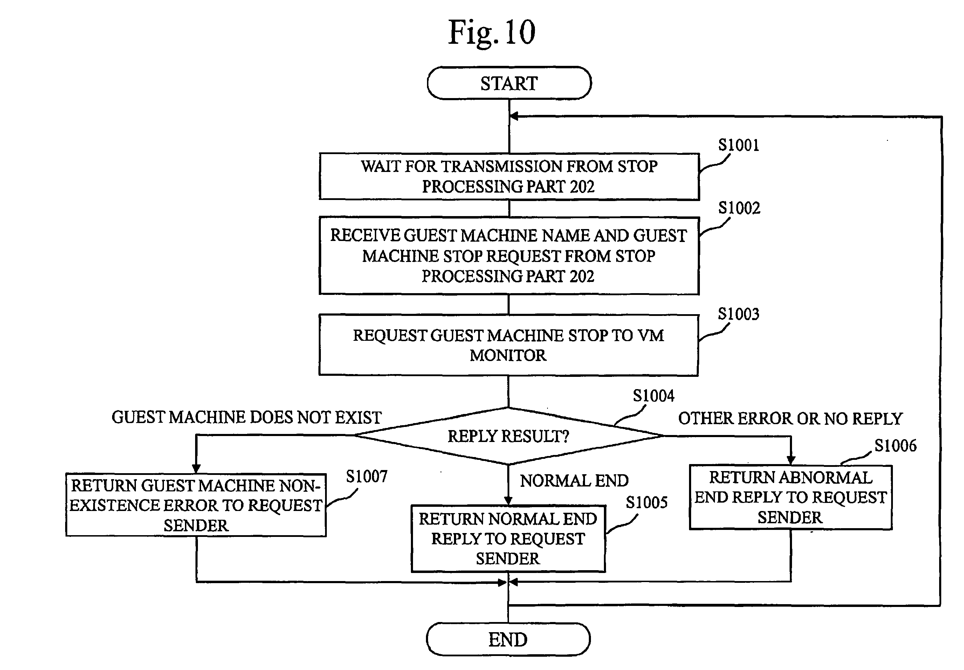

Fig. 8 shows the processing content of a setting management processing part 203 corresponding to the migration of the guest machine. Fig. 9 shows the processing content of a stop processing part 202 corresponding to the migration of the guest machine. Fig. 10 shows the processing content of a guest machine stop processing part 302 corresponding to the migration of the guest machine.
Operations that are different from the first embodiment will be described, and operations that are described in the first embodiment will be omitted.

In the host machine 1b, a request is sent to a VM monitor to migrate the guest machine 2b to the host machine 1c. The guest machine 2b is migrated by, e.g., the on-line migration of a virtual machine.
During the process where the guest machine 2b becomes the guest machine 2c, a guest machine exists in each of the host machine 1b and host machine 1c. The guest machine of only the host machine 1b or 1c operates.
Therefore, the guest machine name of the guest machine 2c is added to a guest machine name list 306 of the stop control part 4c.
This guest machine name is identical to that of the guest machine 2b.
Accordingly, the same guest machine name appears on both the guest machine name list multicast by a stop control part 4b and the guest machine name list multicast by the stop control part 4c.
If it is determined that the guest machine name list sent from the stop control part 4c includes a name which is the same as the other-system guest machine name 204 and that this name has been sent from a host machine being different from the other-system host machine IP address 205 (YES in S804), the setting management processing part 203 of a stop control part 5a of the guest machine 2a which is the redundant system of the guest machine 2b stores the sent host machine IP address at the other-system migration destination host machine IP address 207 and the BMC IP at the other-system migration destination BMC IP address 208 (S806).

When the guest machine 2b completes migration to the host machine 1c and becomes the guest machine 2c, the guest machine name of the guest machine 2b is deleted from a guest machine name list 306 of the stop control part 4b.
When the notification multicasted from the stop control part 4b no longer includes the guest machine name of the guest machine 2b (S803, S807), the setting management processing part 203 of a stop control part 4a replaces the values of the other-system host machine IP address 205 and the other-system BMC IP address 206 with the other-system migration destination host machine IP address 207 and the other-system migration destination BMC IP address 208, and deletes the contents of the other-system migration destination host machine IP address 207 and other-system migration destination BMC IP address 208 (S808).

During the migration of the guest machine 2b to the guest machine 2c, if the guest machine 2a detects that a fault occurs in the guest machine 2b or guest machine 2c, the following operation is carried out.

Firstly, trying to stop the guest machine 2b, the stop processing part 202 of the stop control part 5a refers to the other-system host machine IP address 205 and the other-system guest machine name 204, and sends a stop request for the guest machine 2b to the stop control part 4b of the host machine 1b (S901, S902).
If the migration of the guest machine 2b has not completed yet, the guest machine 2b is stopped, and a completion notification is sent back to the stop control part 5a (S1005).
If the guest machine 2b has already migrated to the guest machine 2c, the stop control part 4b of the host machine 1b sends back an error reply, informing that the guest machine 2b does not exist, to the stop control part 5a (S1007).
In this case, upon reception of the error reply, the stop processing part 202 of the stop control part 5a determines that the guest machine 2b has already migrated to the host machine 1c, and sends a stop request for the guest machine 2c to the stop control part 4c of the host machine 1c by referring to the other-system migration destination host machine IP address 207 (S906, S907).
In response to the stop request, when the guest machine 2c is stopped normally, a completion notification is sent back to the stop control part 5a. In this case, the stop control part 5a ends the process ("normal end" in S909).
If the guest machine 2c has not ended the operation normally, the stop control part 5a receives an error reply or no reply ("error or no reply" in S909). The stop processing part 202 of the stop control part 5a sends a stop request for the host machine 1c to the BMC 8c by referring to the other-system migration destination BMC IP address 208 (S910).
The BMC 8c that has received the stop request stops the host machine 1c.
Thus, the system where an abnormality occurs can be stopped.

In this manner, according to the second embodiment, the virtual machine or physical machine can be stopped in accordance with the migration of the virtual machine. As a result, a problem that a wrong physical machine is stopped or a virtual machine that needs to be stopped cannot be stopped can be avoided.

So far this embodiment has described that in a method of stopping an abnormal system in the redundant structure of a virtual machine, when the guest machine is migrated to another host machine, the stop control part on the host machine and the stop control part on the guest machine perform the following process.
(A) The stop control part on the host machine notifies the sending destination to which the stop request for the guest machine should be sent after the guest machine's migration, and the sending destination to which the stop request for the host machine should be sent after the guest machine's migration.
(B) If the guest machine name notified from the stop control part on the host machine is the guest machine name of the redundant system of its own system, the setting management processing part of the stop control part on the guest machine stores the sending destination to which the stop request for the guest machine should be sent after the guest machine's migration, and the sending destination to which the stop request for the host machine should be sent after guest machine's migration.
(C) When stopping the other-system guest machine, the stop processing part on the guest machine sends a stop request for the guest machine. If the other-system guest machine no longer exists in the host machine, the stop processing part on the guest machine sends a stop request for the guest machine by using the sending destination to which the stop request for the guest machine should be sent after the guest machine's migration.
(D) When the stop processing part on the other-system guest machine fails in the guest machine stop process after the guest machine's migration, the stop processing part on the other-system guest machine sends the host machine stop request to the sending destination to which the stop request for the host machine should be sent after the guest machine's migration, which has been stored by the setting management processing part.

A hardware configuration example of a virtual machine system 100 shown in each of the first and second embodiments will finally be described.

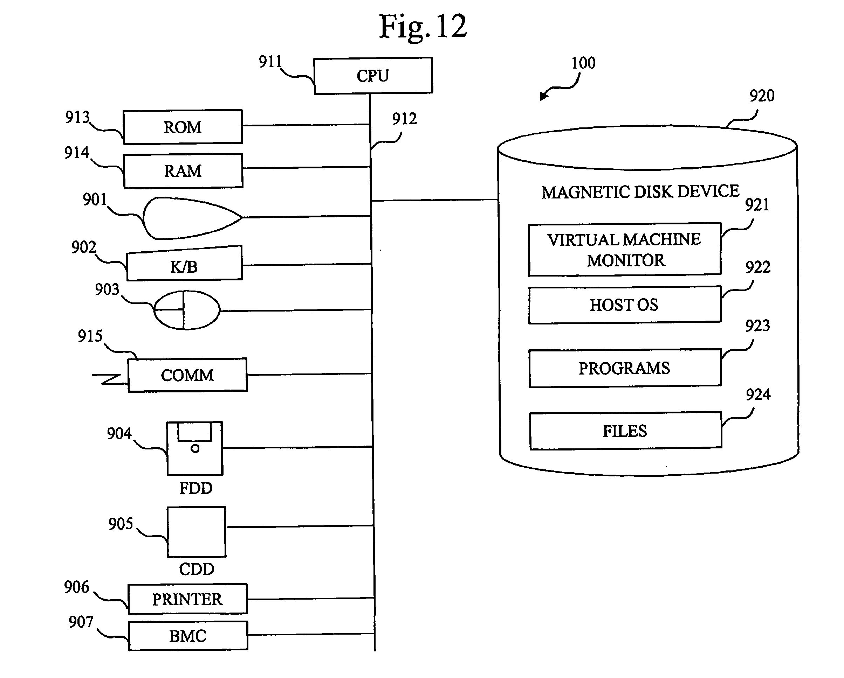

Fig. 12 shows an example of the hardware resources of the virtual machine system 100 shown in each of the first and second embodiments.
Note that the configuration of Fig. 12 is merely an example of the hardware configuration of the virtual machine system 100. The hardware configuration of the virtual machine system 100 is not limited to that shown in Fig. 12, but can be another configuration.

Referring to Fig. 12, the virtual machine system 100 is equipped with a CPU 911 (also referred to as a Central Processing Unit, central processing device, processing device, computation device, microprocessor, microcomputer, or processor) that executes programs.
The CPU 911 is connected to, e.g., a ROM (Read Only Memory) 913, RAM (Random Access Memory) 914, communication board 915, display device 901, keyboard 902, mouse 903, magnetic disk device 920, and BMC 907 via a bus 912, and controls these hardware devices.
Furthermore, the CPU 911 may be connected to an FDD 904 (Flexible Disk Drive), compact disk device 905 (CDD), and printer device 906. In place of the magnetic disk device 920, a storage device such as an optical disk device or memory card (registered trademark) reader/writer device may be employed.
The RAM 914 is an example of a volatile memory. The storage media such as the ROM 913, FDD 904, CDD 905, and magnetic disk device 920 are examples of a nonvolatile memory. These devices are examples of the storage device.
The communication board 915, keyboard 902, mouse 903, FDD 904, and the like are examples of an input device.
The communication board 915, display device 901, printer device 906, and the like are examples of an output device.

The communication board 915 is connected to a network For example, the communication board 915 may be connected to a LAN (Local Area Network), the Internet, or a WAN (Wide Area Network).

The magnetic disk device 920 stores a virtual machine monitor 921, host OS 922, programs 923, and files 924.
Each program of the programs 923 is executed by the CPU 911, virtual machine monitor 921, and host OS 922.
The virtual machine monitor 921 may itself include the function of the host OS 922, or the virtual machine monitor 921 may exist in the host OS 922.

The ROM 913 stores the BIOS (Basic Input Output System) program. The magnetic disk device 920 stores the boot program.
When the virtual machine system 100 is booted, the BIOS program of the ROM 913 and the boot program of the magnetic disk device 920 are executed, and the BIOS program and boot program boot the virtual machine monitor 921 and host OS 922.

The programs 923 include a program that realizes the internal elements of the stop control parts 4, 5, and 6 shown in the first and second embodiments.
The files 924 include IP addresses of the information memory areas 209 and 307, and the like shown in the first and second embodiments.

The files 924 store information, data, signal values, variable values, and parameters indicating the results of the processes described as "determination", "calculation", "comparison", "evaluation", "update", "setting ", "selection", and the like in the description of the first and second embodiments, as the items of "files" and "databases".
The "files" and "databases" are stored in a recording medium such as a disk or memory. The information, data, signal values, variable values, and parameters stored in the storage medium such as a disk or memory are read out to the main memory or cache memory by the CPU 911 through a read/write circuit, and are used for the operations of the CPU such as extraction, retrieval, look-up, comparison, computation, calculation, process, edit, output, print, and display.
During the operations of the CPU including extraction, retrieval, look-up, comparison, computation, calculation, process, edit, output, print, and display, the information, data, signal values, variable values, and parameters are temporarily stored in the main memory, register, cache memory, buffer memory, or the like.
The arrows of the flowcharts described in the first and second embodiments mainly indicate input/output of data and signals. The data and signal values are stored in a recording medium such as the memory of the RAM 914, the flexible disk of the FDD 904, the compact disk of the CDD 905, or the magnetic disk of the magnetic disk device 920; or an optical disk, mini disk, or DVD. The data and signals are transmitted online via the bus 912, signal lines, cables, and other transmission media.

The "part" in the first and second embodiments may be a "step", "procedure", or "process". Namely, the "part" may be realized as the firmware stored in the ROM 913. Alternatively, the "part" may be implemented as only software; by only hardware such as an element, a device, a substrate, or a wiring line; by a combination of software and hardware; or furthermore by a combination of software and firmware. The firmware and software are stored as programs in a recording medium such as a magnetic disk, flexible disk, optical disk, compact disk, mini disk, or DVD. The programs are read by the CPU 911 and executed by the CPU 911. In other words, the programs serve as the "parts" in the first and second embodiments to cause the computer to function. Alternatively, the programs serve to cause the computer to execute the procedures and methods of the "parts" in the first and second embodiments.

In this manner, the virtual machine system 100 shown in the first and second embodiments is a computer provided with a CPU being a processing device; a memory, magnetic disk, or the like being a storage device; a keyboard, mouse, communication board, or the like being an input device; and a display device, communication board, or the like being an output device, and realizes the functions described as the "parts" by using these processing device, storage device, input device, and output device, as described above.

### Brief Description of Drawings

[Fig. 1] is a diagram showing a system configuration example according to the first embodiment.
[Fig. 2] is a diagram showing a configuration example of a stop control part of a guest machine according to the first embodiment.
[Fig. 3] is a diagram showing a configuration example of a stop control part of a host machine according to the first embodiment.
[Fig. 4] is a flowchart showing an operation example of the stop control part of the host machine according to the first embodiment.
[Fig. 5] is a flowchart showing an operation example of the stop control part of the guest machine according to the first embodiment.
[Fig. 6] is a flowchart showing an operation example of the stop control part of the guest machine according to the first embodiment.
[Fig. 7] is a flowchart showing an operation example of the stop control part of the host machine according to the first embodiment.
[Fig. 8] is a flowchart showing an operation example of a stop control part of a guest machine according to the second embodiment.
[Fig. 9] is a flowchart showing an operation example of the stop control part of the guest machine according to the second embodiment.
[Fig. 10] is a flowchart showing an operation example of a stop control part of a host machine according to the second embodiment.
[Fig. 11] is a diagram showing a system configuration example according to the second embodiment.
[Fig. 12] is a diagram showing a hardware configuration example of a virtual machine system according to each of the first and second embodiments.

### Reference Signs List

1 host machine, 2 guest machine, 3 guest machine, 4 stop control part, 5 stop control part, 6 stop control part, 7 NIC, 8 BMC, 9 network switch, 10 router, 100 virtual machine system, 201 stop control part, 202 stop control part, 203 setting management processing part, 301 stop control part, 302 guest machine stop processing part, 303 host machine notification processing part

## Claims

1. A management apparatus that manages a host machine which is included in a virtual machine system and a guest machine which operates by utilizing the host machine, the management apparatus comprising:
a guest stop instruction part that transmits to the virtual machine system a guest stop instruction instructing to stop operation of the guest machine; and
a host stop instruction part that determines whether or not the guest machine stops operation normally and, if it is determined that the guest machine does not stop operation normally, transmits to the virtual machine system a host stop instruction instructing to stop operation of the host machine.

2. The management apparatus according to claim 1,
wherein the management apparatus manages
a first virtual machine system that includes at least a guest machine and migrates the guest machine, and
a second virtual machine system that includes at least a host machine and serves as a migration destination of the guest machine of the first virtual machine system,
wherein the guest stop instruction part
determines whether or not the guest machine has migrated from the first virtual machine system to the second virtual machine system and, if it is determined that the guest machine has migrated from the first virtual machine system to the second virtual machine system, transmits to the second virtual machine system a guest stop instruction instructing to stop operation of the guest machine, and
wherein the host stop instruction part
determines whether or not the guest machine stops operation normally in the second virtual machine system and, if it is determined that the guest machine has not stopped operation normally in the second virtual machine, transmits to the second virtual machine system a host stop instruction instructing to stop operation of the host machine.

3. The management apparatus according to claim 2,
wherein the guest stop instruction part transmits the guest stop instruction to the first virtual machine system and, upon reception of a reply informing that the guest machine does not exist from the first virtual machine system, determines that the guest machine has migrated from the first virtual machine system to the second virtual machine system.

4. The management apparatus according to claim 3,
wherein the guest stop instruction part
receives a notification notifying that the guest machine is a guest machine of the second virtual machine system from the second virtual machine system when the first virtual machine system starts a process of migrating the guest machine to the second virtual machine system,
receives a notification notifying that the guest machine is not a guest machine of the first virtual machine system from the first virtual machine system when the first virtual machine system completes the process of migrating the guest machine to the second virtual machine system, and
transmits the guest stop instruction to the first virtual machine system when the guest machine is stopped after receiving the notification from the second virtual machine system and before receiving the notification from the first virtual machine system.

5. The management apparatus according to claim 1,
wherein the guest stop instruction part transmits the guest stop instruction when a fault occurs in the guest machine.

6. The management apparatus according to claim 1,
wherein the management apparatus manages a host machine and guest machine of a virtual machine system including a BMC (Baseboard Management Controller), and
wherein the host stop instruction part transmits the host stop instruction to the BMC of the virtual machine system and instructs the BMC to stop operation of the host machine.

7. The management apparatus according to claim 1,
wherein the management apparatus is a virtual machine system that includes a host machine and a guest machine which operates by utilizing the host machine, and
wherein the guest stop instruction part and the host stop instruction part operate in the guest machine.

8. A management method that manages, by a computer, a host machine which is included in a virtual machine system and a guest machine which operates by utilizing the host machine, the management method comprising:
by the computer, transmitting to the virtual machine system a guest stop instruction instructing to stop operation of the guest machine; and
by the computer, determining whether or not the guest machine stops operation normally and, if it is determined that the guest machine does not stop operation normally, transmitting to the virtual machine system a host stop instruction instructing to stop operation of the host machine.

9. A program comprising causing a computer that manages a host machine which is included in a virtual machine system and a guest machine which operates by utilizing the host machine, to execute
a guest stop instruction process of transmitting to the virtual machine system a guest stop instruction instructing to stop operation of the guest machine, and
a host stop instruction process of determining whether or not the guest machine stops operation normally and, if it is determined that the guest machine does not stop operation normally, transmitting to the virtual machine system a host stop instruction instructing to stop operation of the host machine.
